(19) Europäisches Patentamt
European Patent Office
Office européen des brevets

(11) **EP 1 830 491 B1**

(12) **EUROPEAN PATENT SPECIFICATION**

(45) Date of publication and mention
of the grant of the patent:
**31.10.2012 Bulletin 2012/44**

(21) Application number: **04802415.2**

(22) Date of filing: **01.12.2004**

(51) Int Cl.:
*H04B 10/158* *(2006.01)*

(86) International application number:
**PCT/CN2004/001397**

(87) International publication number:
**WO 2006/058459 (08.06.2006 Gazette 2006/23)**

(54) **ADAPTIVE OPTICAL RECEIVING DEVICE AND THE METHOD THEREOF**

ADAPTIVE OPTISCHE EMPFANGSEINRICHTUNG UND VERFAHREN DAFÜR

DISPOSITIF DE RECEPTION OPTIQUE ADAPTATIF ET PROCEDE ASSOCIE

(84) Designated Contracting States:
**AT BE BG CH CY CZ DE DK EE ES FI FR GB GR HU IE IS IT LI LU MC NL PL PT RO SE SI SK TR**

(43) Date of publication of application:
**05.09.2007 Bulletin 2007/36**

(73) Proprietor: **ZTE Corporation Guangdong 518057 (CN)**

(72) Inventor: **SHU, Huade Nanshan Dist.,Shenzhen,Guangdong 518057 (CN)**

(74) Representative: **Gymer, Keith Francis et al Page Hargrave Southgate Whitefriars Lewins Mead Bristol BS1 2NT (GB)**

(56) References cited:
**EP-A1- 0 392 244      WO-A-02/071616**
**CN-A- 1 466 276      JP-A- 2001 237 779**
**US-A- 5 805 641      US-A1- 2004 086 275**

**Description**

**Technical Field**

The invention relates to an optical transmission system, especially to a hitless real-time adaptive optical receiving device and the method thereof in the optical transmission system.

**Background Art**

An optical transmission system uses an optical receiver to receive the service transmitted, such as the signal STM-16 and the signal STM-64, with the speed of 2488.320Mb/s and 9953.280Mb/s respectively. Generally, in SDH (synchronous digital hierarchy) and WDM (wavelength division multiplexing) optical transmission systems, the working point of the receiver will not vary over time. When beginning to work, performance of the receiver can be set as optima according to the working state of the line. However, as time goes by, changes of other various factors will lead to the result that the receiving performance of the receiver is not optimal.

The aging of a laser will make the working point of the laser vary over time, and lead to the change of the transmission performance, thus result in the deterioration of the eye pattern of the signal at the receiver.

In SDH and WDM optical transmission system of long distance, because of variation of the attenuation of the line, aging of EDFA (erbium doped fiber amplifier), and increase/decrease of the number of the WDM channels, the optical power injected into optic fibre is different. Due to different optic fibre nonlinear effects, when the optical signal reaches the receiver, the received signal will change. The higher the modulation speed of the signal is, the greater the influence of this kind of optic fibre nonlinear effect is.

In SDH and WDM optical transmission system of long distance, the aging of EDFA and the variation of the attenuation of the line will make the optical SNR of the signal at the receiver vary continuously.

In the optical communication system with the speed of 10Gb/s or above, dispersion compensation device is often used to compensate the dispersion of line optic fibre. However, the dispersion of line optic fibre will vary slightly over time, and the residual dispersion at the receiver varies with time continuously, which will also bring about the variation of the signal at the receiver.

In summary, these factors above illustrate that, as time goes by, quality of the signals arriving at the receiver after being transmitted on the line will vary constantly. For this kind of signals which vary constantly, how to receive adaptively is one of the key points in this art.

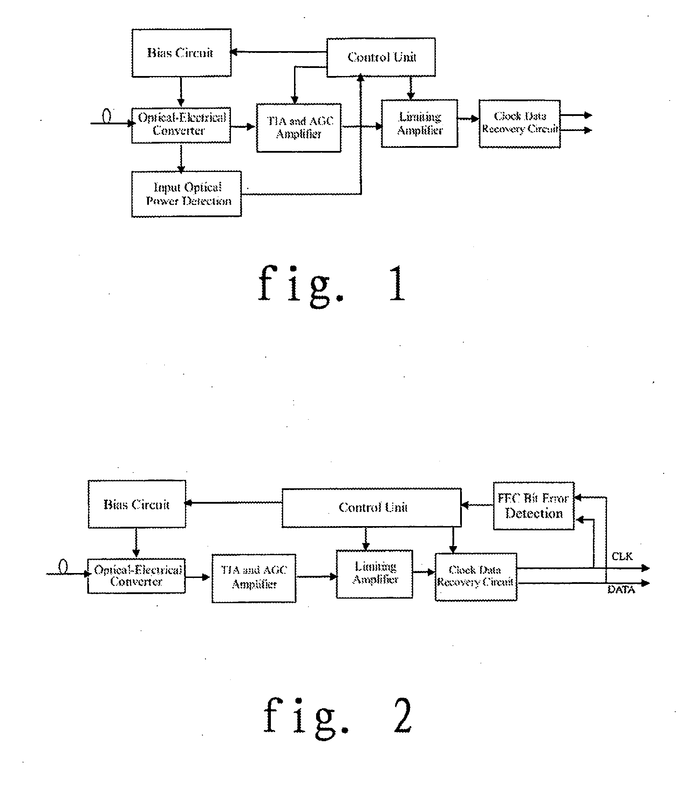

In the existing optical transmission system, a receiver usually consists of an optical-electrical converter, an AGC (automatic gain control) amplifier, a limiting amplifier, a clock/data retiming circuit etc., and its construction is shown in figure 1. Although the decision level and the decision time of this kind of receiver can be optimized according to the original signal, they remain changeless during the course of working; or they can be optimized according to a simple control tactic, but if the tactic is not chosen suitably, bit error may occur during the optimization course.

For the variation of the signal received, there are many methods for receiving adaptively. Currently, the method for receiving adaptively in common use is to perform feedback control for the receiver using FEC (Forward Error Correction), and thus to achieve adaptive receiving in real time. The block of the principle is shown in figure 2. The receiver can be controlled adaptively using FEC for detecting bit error rate. This kind of method in which the receiver detects the bit error using FEC optimizes continuously the decision level and decision time of the receiver to achieve adaptive receiving. For the adaptive receiving in this method, the optimization is performed for the signal being used currently. In order to ensure that the signal after FEC decoding has no bit error, the optimization tactic should be chosen carefully so that there are few bit errors before FEC during the optimization course; additionally, this kind of optimization method can only be performed under the condition of little bit error, and the time for optimizing is long. On the other hand, if the adaptive receiving is performed using FEC technique, the bandwidth of the receiver can not be optimized for different signals, and there is some limitation when using this technique.

US2004/086275 discloses a method of determining the value of a current data bit in an optical data stream by reducing interference caused by N prior bits. The method includes receiving an electrical signal derived from the optical data stream, and creating X channels for making tentative decisions as to the value of the current data bit, where X=2N. The processing of the X channels is carried out by one interference-reducing optoelectronic device processing the single data stream to successively determine the value of each current data bit in the data stream in accordance with the determined value for the N prior bits in each case.

Optimizing only the decision level and the decision time of the receiver will lead to a wrong decision during the course of optimization, and thus result in unnecessary bit error. Additionally, there are many situations in which FEC is not used in current optical transmission systems. Therefore, a receiving method is required to adapt to the variation of the signal without any loss in real time in optical transmission systems.

## EP 1 830 491 B1

## Summary of the Invention

The purpose of the invention is to provide an adaptive optical receiving device and the method thereof to overcome the disadvantages of prior art and to receive varying signals in optical transmission systems adaptively without loss in real time.

In order to achieve the purpose above, an adaptive optical receiving device is provided according to one aspect of the invention, including: an optical-electrical converter for receiving an optical signal and convert it into an electrical signal; a trans-impedance and AGC amplifier for amplifying the output signal of the optical-electrical converter above and adjusting the amplitude of the amplified signal; a bias circuit for providing bias for the direct current (DC) working point of the optical-electrical converter above; the device still includes: a first limiting amplifier and a second limiting amplifier, which are used to amplify the output signals with smaller amplitude of the trans-impedance and AGC amplifier above and shape for output respectively; a first clock data recovery circuit and a second clock data recovery circuit, which are used to extract the data and clock from the output signals of the first limiting amplifier and the second limiting amplifier respectively; a first demultiplexer and signal quality detection circuit and a second demultiplexer and signal quality detection circuit, which are used to detect in real time quality of the output signals of the first clock data recovery circuit and the second clock data recovery circuit respectively; a hitless changeover unit, which is used to choose one main channel to output to the post-stage circuit according to the signal quality of the first demultiplexer and signal quality detection circuit and the second demultiplexer and signal quality detection circuit above, take other channel as the standby channel, and changeover between the main channel and the standby channel according to the control signal in real time; a control unit, which is used to control the components in the main channel above and the bias circuit and the hitless changeover unit above, and to control every component in the standby channel above to optimize the signals in this channel in real time.

Preferably, this device also includes: a first dynamic filter and a second dynamic filter, which are used to filter dynamically the output signal of said trans-impedance and AGC amplifier and to output the signal to said first limiting amplifier and second limiting amplifier.

Preferably, said control unit uses the signal quality detection signal to control the first demultiplexer and signal quality detection circuit and the second demultiplexer and signal quality detection circuit above to detect the quality of the signals output by the first clock data recovery circuit and the second clock data recovery circuit in real time.

Preferably, said first demultiplexer and signal quality detection circuit and the second demultiplexer and signal quality detection circuit send back the detection results of the signal quality of the main channel and the standby channel respectively to said control unit; said control unit controls the optimization for each component of the standby channel according to the signal quality detection result of said standby channel; after finishing the optimization for the signal in the standby channel above, said control unit compares the signal quality detection results fed back respectively by said first demultiplexer and signal quality detection circuit and second demultiplexer and signal quality detection circuit, if it is affirmed that the signal quality of said main channel is worse than that of the standby channel, or the signal quality of said main channel decreases to the pre-specified threshold and the signal quality after optimization in said standby channel is better than this specified threshold, said hitless changeover unit is informed of performing the switch between the main channel and the standby channel.

Preferably, said control unit uses the changeover control signal to control the hitless changeover unit to switch between the main and the standby channels.

Preferably, the quality detection for the received signals by said first demultiplexer and signal quality detection circuit and second demultiplexer and signal quality detection circuit is to detect the bit error rate of the received signals; said control unit compares the detected bit error rate of the main channel with the specified bit error rate threshold, and if it is lower than this bit error rate threshold, then said hitless changeover unit is controlled to switch between the main channel and the standby channel.

Preferably, the quality detection for the received signals by said first demultiplexer and signal quality detection circuit and second demultiplexer and signal quality detection circuit is to detect the factor Q of the received signals; said control unit compares the detected factor Q of the main channel with the specified factor Q threshold, if the factor Q of said main channel is worse than the factor Q after optimization in said standby channel or the factor Q of said main channel decreases to the specified threshold and the factor Q after optimization in said standby channel is better than this specified threshold, said hitless changeover unit is controlled to switch between the main and the standby channels.

Preferably, the realization of said hitless changeover unit is based on the signal with SDH frame structure. This hitless changeover unit includes: a first frame synchronization module and a second frame synchronization module, which are used to search SDH frame for the signals output by said first demultiplexer and signal quality detection circuit and second demultiplexer and signal quality detection circuit respectively; a data alignment control module, which is used to receive and align the signals output by the first frame synchronization module and the second frame synchronization module when the signals output by these two modules have different delays; a first FIFO module and a second FIFO module, which are used to buffer the signals from said first frame synchronization module and second frame

3

synchronization module or signals from said data alignment module according to the set position of the read/write pointer; a channel choosing circuit, which is used to select and output signals buffered in the first FIFO module and the second FIFO module respectively under the control of the changeover control signal, the time of the changeover is at the position of the frame synchronization information or other redundant information of the signal to realize the hitless changeover.

According to another aspect of the invention, an adaptive optical receiving method is provided using said adaptive receiving optical device. In this method, two sets of independent limiting amplifiers and clock data recovery circuits are used to process the received signals, the hitless changeover unit chooses the channel with good signal quality to be the main channel, the other one to be the standby channel; meanwhile, the control unit controls the optimization for the signals in the standby channel in real time, and when the signal quality in the main channel becomes worse, it is to hand over between the main and the standby channels.

Preferably, the method includes: said hitless changeover unit chooses the main channel to process the received optical signal; the signal quality in the current main channel and standby channel is monitored in real time; under the control of the control unit, the limiting amplifier and the clock data recovery circuit on the current standby channel are optimized to optimize the signal quality in this standby channel; signal quality of said main channel and that of standby channel are compared; if the signal quality in the main channel is worse than the signal quality after optimization in the standby channel or the signal quality in said main channel decreases to the specified threshold and the signal quality after optimization in the standby channel is better than this threshold, said hitless changeover unit perform switch between the main channel and the standby channel; the signal after being processed is output from said main channel.

Preferably, said device also includes a first dynamic filter and a second dynamic filter, and said step of optimizing further includes: under the control of the control unit, the dynamic filter, limiting amplifier and clock data recovery circuit on the current standby channel are optimized to optimize the signal quality in this standby channel.

Preferably, before said chosen steps, it still includes: parameters of each component in this adaptive optical receiving device are specified; said device still includes a first dynamic filter and a second dynamic filter, which is characterized in that said step of specifying parameters also includes: the parameters are specified for said first dynamic filter and second dynamic filter.

The adaptive optical receiving scheme provided in the invention uses two sets of independent amplifiers and timing extraction circuits to process the received signals, and the channel with good signal quality is chosen to be the main channel, the other channel is to be the standby channel. Meanwhile, the signal of the standby channel is optimized in real time, which can make the same receiver implement the hitless optimal receiving of the signals with different qualities at different times, improve the receiving quality of the receiver, promote the utilization ratio of the system and the performance of bit error of long time, improve the performance of the optical receiver for receiving the signals with varying qualities in real time.

**Description of Attached Drawings**

The characteristics, advantages, and purposes of the invention above are believed to be understood better with the description of the embodiments of the invention accompanying with the attached drawings.

Figure 1 is a structure block of a traditional optical receiver;

Figure 2 is a structure block of the optical receiver having adaptive function and utilizing FEC detection technique in prior art;

Figure 3 is a structure block of the adaptive optical receiving device in accordance with one embodiment of the invention;

Figure 4 is a structure block of the adaptive optical receiving device in accordance with another embodiment of the invention;

Figure 5 is a flow chart of the adaptive optical receiving method using the adaptive optical receiving device illustrated in figure 3 in accordance with one embodiment of the invention;

Figure 6 is a flow chart of the adaptive optical receiving method using the adaptive optical receiving device illustrated in figure 3 in accordance with another embodiment of the invention;

Figure 7 is an optical eye pattern at the optical receiving side after transmission of the direct modulated laser signal;

Figure 8 is an electrical eye pattern of the output at AGC circuit after transmission of the direct modulated laser signal when the bandwidth of receiving device the is 1.5*fb;

Figure 9 is an electrical eye pattern of the output at AGC circuit after transmission of the direct modulated laser signal when the bandwidth of the receiving device is 0.7*fb;

Figure 10 is a drawing of the decision time and decision level when the signal quality of the receiving device above is better than the specified threshold of the bit error rate;

Figure 11 is a drawing of the bit error rate of the receiving device above at different decision times and different decision levels;

Figure 12 is a drawing of factor Q of the receiving device above at different decision times and different decision levels;

Figure 13 is a drawing of factor Q of the receiving device above at different decision times and different decision levels;

Figure 14 is an implementation block of the hitless changeover unit in the adaptive optical receiving device in accordance with one embodiment of the invention.

## Specific Embodiment of the Invention

Figure 1 is a structure block of a traditional optical receiver, wherein an input optical signal is converted into an electrical signal by an optical-electrical converter, then is amplified by a trans-impedance amplifier (TIA). In order to improve the dynamic range of the receiver and prevent the amplitude of the output electrical signal from being too large when the input optical signal power is great, the gain of the amplifier can be reduced when the input optical signal power is great, and this is so-called AGC (automatic gain control). The amplified signal is amplified by LIA (limiting amplifier) which is an amplifier for limiting the output with greater gain, which means that a segment of the signal with less amplitude is shaped into code "1" or code "0" after being amplified, the DC working point of the LIA is changed, and thus the level for deciding the signal amplitude can be changed. The CDR (clock data recovery) circuit extracts the clock and the data for the signal of limiting output. The bias circuit is used to provide bias for DC working point of the optical-electrical converter, the input optical power detecting unit detects the input optical power. The control unit controls TIA and AGC amplifier, LIA, and CDR, thus can control the parameters such as the DC working point of LIA, the decision time of CDR, etc..

Figure 2 is a block of a receiver using FEC technique to implement adaptive receiving, wherein a FEC bit error detecting unit is added to the existing receiver. Using FEC function to detect the bit error rate of the signal, this unit controls various parameters such as the gain of TIA and AGC amplifier, DC working point of LIA, and the decision time of CDR, etc..

The key content of the invention is that, in order to achieve real-time optimization and to avoid bit error resulted from the optimization, two sets of dependant amplifiers and CDR circuits are used, and the hitless changeover unit chooses signals with good quality as the main signals to output; meanwhile, signals with bad quality are called standby signals, which are used for real-time optimization, and when quality of the main signal becomes worse, the hitless changeover unit performs the hitless switching between the main signal and the standby signal, with the main signal being replaced by the standby signal.

In the following, preferred embodiments of the invention will be described in detail with reference to the attached drawings.

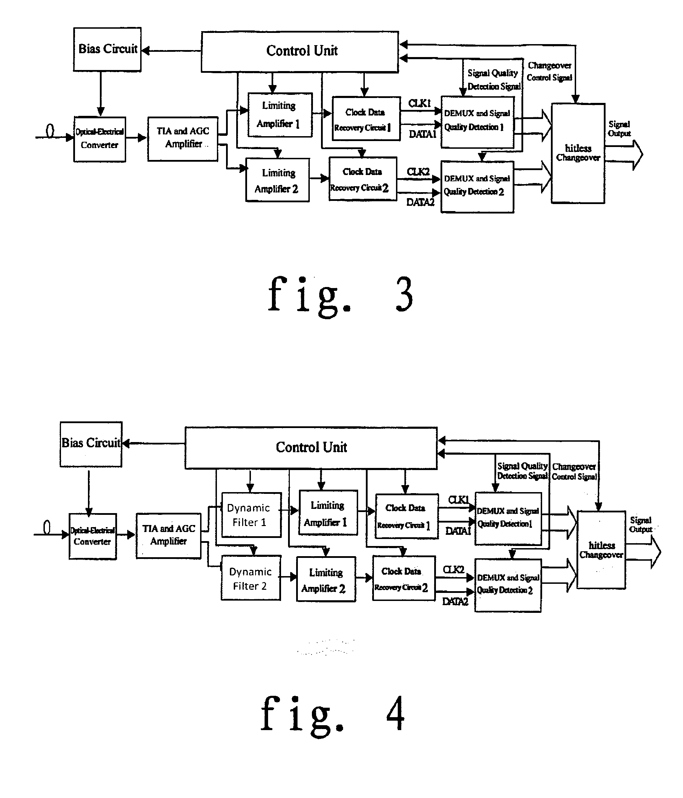

Figure 3 is a structure block of the adaptive optical receiving device in accordance with one embodiment of the invention, which shows the condition without using a dynamic filter.

As shown in figure 3, an optical-electrical converting device is used in this embodiment, which converts the received optical signal into an electrical signal and then sent the converted signal to TIA and AGC amplifier for amplification, the amplified signal is sent to the two sets of separate LIA 1 and LIA 2, CDR circuit 1 and CDR circuit 2 to generate two groups of the same data signals, one of which is chosen by the hitless changeover unit as the main signal to be output to the post-stage circuit after passing through the DEMUX and signal quality detection circuit 1 and the DEMUX and signal quality detection circuit 2. The channel which is not chosen is taken as a standby channel. Meanwhile, under the control of the signal for detecting the signal quality of the control unit, the DEMUX and signal quality detection circuit 1 and the DEMUX and signal quality detection circuit 2 send the quality detection results of signal with bit error of the 2 channels respectively to the control unit, which controls the hitless changeover unit, LIA and CDR circuit. Meanwhile, the control unit controls the LIA in the standby channel and the CDR circuit to optimize the signals in this channel. When the signal quality in the standby channel is much better than that in the main channel, or the signal quality in the main channel decreases below the specified threshold and the signal quality after optimization in the standby channel is better than this threshold, the control unit controls the hitless changeover unit to perform the switch between the main channel and the standby channel using the changeover control signal.

Wherein, the function of the bias circuit in figure 3 is similar to that of the bias circuit in a traditional receiver. The bias circuit is used to provide bias for the DC working point of the optical-electrical converter. Additionally, the functions of the TIA and AGC amplifier, LIA 1 and 2, CDR circuit 1 and 2 are the same as those of the TIA and AGC amplifier, LIA 1 and 2, CDR circuit 1 and 2 in a traditional receiver.

Figure 4 is a structure block of the adaptive optical receiving device in accordance with another embodiment of the invention, which shows the condition of using a dynamic filter.

In this embodiment, the dynamic filters 1 and 2 are added to the receiving device as illustrated in figure 3, which filter the signals from TIA and AGC amplifier, and then send the filtered signals of these two channels to the LIA 1 and 2. Wherein, the functions of the dynamic filters 1 and 2 are the same as those of the dynamic filters in the traditional receivers.

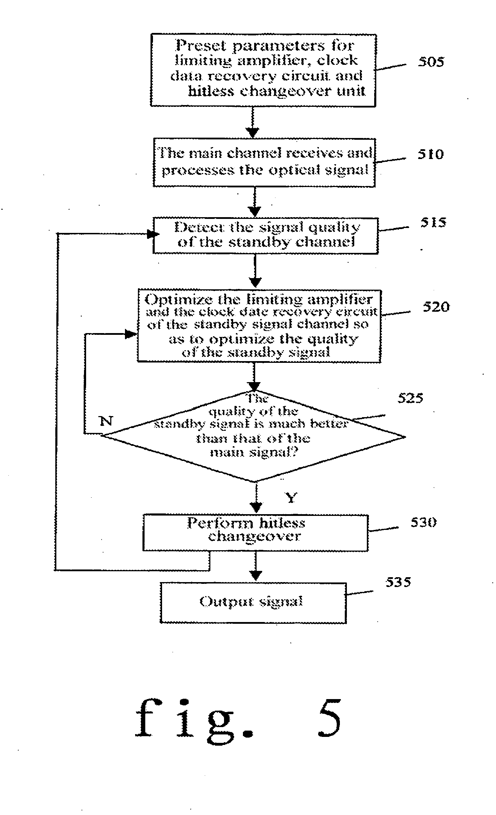

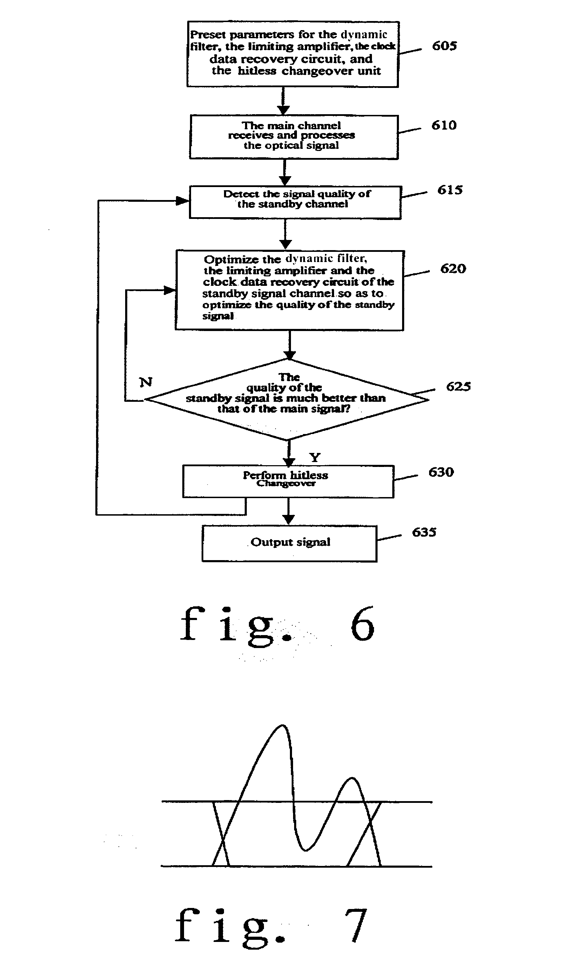

Methods in figure 5 and figure 6 are optimized methods of adaptive optical receiving of the optical receiving devices shown in figure 3 and figure 4 respectively, wherein the case in figure 5 is for using no dynamic filter, the case in figure 6 is for using a dynamic filter. The steps of the methods in figure 5 and figure 6 are substantially the same, except for some configuration and control for the filter, thus the adaptive optical receiving method of the invention will be described combining figure 5 and figure 6 in the following.

In steps 505, 605, at the beginning of working, parameters are preset for the dynamic filter (figure 6), LIA, and CDR circuit. The hitless changeover unit is preset to select a channel. The channel selected by the hitless changeover unit is referred to as the main channel, and un-chosen channel is referred to as the standby channel. By way of example, provided the hitless changeover unit chooses channel 1 to output, now channel 1 is the main channel, and channel 2 is the standby channel, the initial values of the parameters of dynamic filter 1 (figure 6), LIA 1, and CDR circuit 1 are preset by the control unit; the initial values of the parameters of dynamic filter 2 (figure 6), LIA 2, and CDR circuit 2 are also preset by the control unit.

In steps 510, 610, after presetting the parameters, the main channel is used to receive the optical signal and implement the signal processing whose function is the same as that of the traditional optical receiver, and to output the signal processed to the post-stage circuit.

In steps 515, 615, when the main channel is working, the control unit monitors the signal quality of the main channel and the standby channel.

In steps 520, 620, the control unit optimizes the dynamic filter (figure 6), LIA 2, and CDR circuit 2 of the standby channel, i.e. channel 2, according to the detected signal quality of the standby channel, and makes the signal quality of the standby channel the best.

In steps 525, 625, the control unit continuously compares the signal quality of the main channel with that of the standby channel. If the control unit determines that the signal quality of the main channel is better than that of the standby channel, then turn to step 520, 620 to continue to optimize the signal in the standby channel. If the control unit determines that the signal quality of the standby channel is much better than that of the main channel, or the signal quality of the main channel decreases down to the specified threshold and the signal quality after optimization of the standby channel is better than this threshold, turn to step 530, 630 to perform hitless changeover.

In steps 530,630, after optimizing the standby channel, the control unit determines that the signal quality of the main channel is much worse than that of the standby channel, or the signal quality of the main channel decreases down to the specified threshold and the signal quality after optimization of the standby channel is better than this threshold, the hitless changeover unit changes over the main channel and the standby channel, the current standby channel, i.e. channel 2, is chosen to output the signal. Now the primary standby channel, i.e. channel 2, is switched to be the main channel, while the primary main channel, i.e. channel 1, is switched to be the standby channel. Then return to steps 515, 615, and repeat the action above of monitoring in real time; meanwhile, in steps 535, 635, the signal of the main channel after the selection is output to the post-stage circuit.

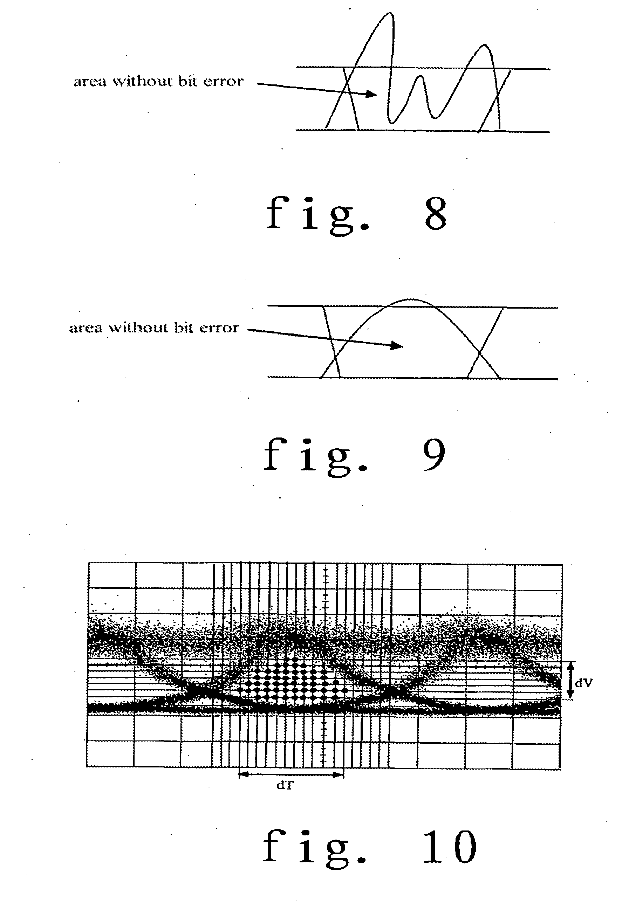

In the invention, the dynamic filter is optional, and use of a dynamic filter can further increase the adaptability of the receiver. Figure 7 is a optical eye pattern in the embodiment above after transmission of the direct modulated laser signal; figure 8 is an electrical eye pattern of this receiving device output at AGC circuit after transmission of the direct modulated laser signal when the bandwidth is 1.5*fb; figure 9 is an electrical eye pattern of this receiving device output at AGC circuit after transmission of the direct modulated laser signal when the bandwidth is 0.7*fb. It can be seen that the decision area of the eye pattern is different under different bandwidths of the receivers, the decision area of the receiving device of figure 9 is greater than that of figure 8, thus, the bit error rate of the receiving device illustrated in figure 9 under optimal decision level and decision time is better than the bit error rate of the receiver illustrated in figure 10.

In the following, several specific methods for implementing signal quality detection, control unit, and hitless changeover unit will be introduced accompanying with the embodiment described above.

1. Methods for implementing signal quality detection and control unit

There are many methods for implementing signal quality detection and control unit. In signal quality detection, bit error rate of the signal can be detected, factor Q of the signal can also be detected, and other indexes which can represent performance of the signal, can also be detected. The control unit can also adopt various tactics. By way of example, two methods for detecting signal quality and corresponding control tactics of the control units will be illustrated hereinafter.

(1) a tactic based on bit error rate

In a case of a dynamic filter, many sets of dynamic filter parameters are set. Under each set of dynamic filter parameters, the decision level of LIA and the decision time of CDR circuit are changed, and bit error rates under different decision levels and different decision times are compared. The schematic drawing of the decision is shown in figure 10, wherein the longitudinal and the transverse lines of the eye pattern represent different decision times of CDR circuits and different decision levels of LIA respectively.
For each set of dynamic filter parameters, the value BERs (T,V) (bit error rate) under different decision times T and different decision levels V in the eye pattern are recorded, which means to record the BER at every point in the lattice in figure 10. The detected BER is compared with the specified BER threshold BERth (bit error rate threshold). The lattice illustrated in figure 10 represents the decision level and the decision time which are better than the condition of the specified the BERth. The interval between the farthest level of LIA and the periphery of the lattice is denoted by dV, the interval between the farthest decision time and the periphery of the lattice is denoted by dT. For different dynamic filter parameters, areas of the lattice which are better than the condition of the specified BERth select optimal dynamic filter parameters according to the rule of maximum area of lattice. Then, in the lattice with the largest area, the point which is furthest from both longitudinal and transverse direction is searched, thus the optimal decision level and decision time are got.
When the BER of the main channel is worse than the specified threshold BERth, decision level and the decision time of the standby channel are first se at the optimal point above, then changeover is performed.
In a case without the dynamic filter, the theoretical block of the device of the invention is shown in figure 3, and the method of optimization is shown in figure 5. As long as the point in the lattice which is furthest from both longitudinal and transverse directions, the optimal decision level and decision time are got. Similarly, if the BER of the main channel is worse than the specified threshold BERth, the decision level and the decision time of the standby channel are first set at the optimal point, then changeover is performed.

(2) a tactic based on factor Q

Factor Q is used to measure the electrical SNR of the receiver at the decision circuit. This kind of electrical SNR finally determines the BER of the system. Factor Q is defined as the ratio of the signal to the noise at the decision level and the decision time. Provided the probabilities of signal 1 and signal 0 are the same, i.e., P(0)=P(1)=0.5, and provided the noise has no relationship with the statistical characteristics of the signal, factor Q is defined as:

$$Q = \frac{\mu_1 - \mu_0}{\sigma_1 + \sigma_0}$$

There are many methods for detecting factor Q. The tactic based on factor Q of the invention is to get the factor Q by using an extrapolation method through the BER detected.
The relationship between the BER of the signal and the factor Q is as follows:

$$BER(V_{th}) = \frac{1}{2}\left( erfc\frac{|V_{th} - \mu_1|}{\sigma_1} + erfc\frac{|V_{th} - \mu_0|}{\sigma_0} \right) = \frac{1}{2}erfc\frac{Q(V_{th})}{\sqrt{2}}$$

Wherein, $V_{th}$ is the decision level, $\mu_1$ and $\mu_0$ are the average voltage for code "1" and code "0" respectively, $\sigma_1$ and $\sigma_0$ are the root mean squares of the noise of code "1" and code "0" respectively. $BER(V_{th})$ and $Q(V_{th})$ are the

BER and factor Q corresponding to the decision level respectively.

Thus, the factor Q corresponding to each decision level and decision time can be calculated with the BER according to the equation above. For the factor Q corresponding to the decision level and the decision time without detecting the BER, it can be obtained by extrapolating the factor Q of the decision level and the decision time with detecting the BER.

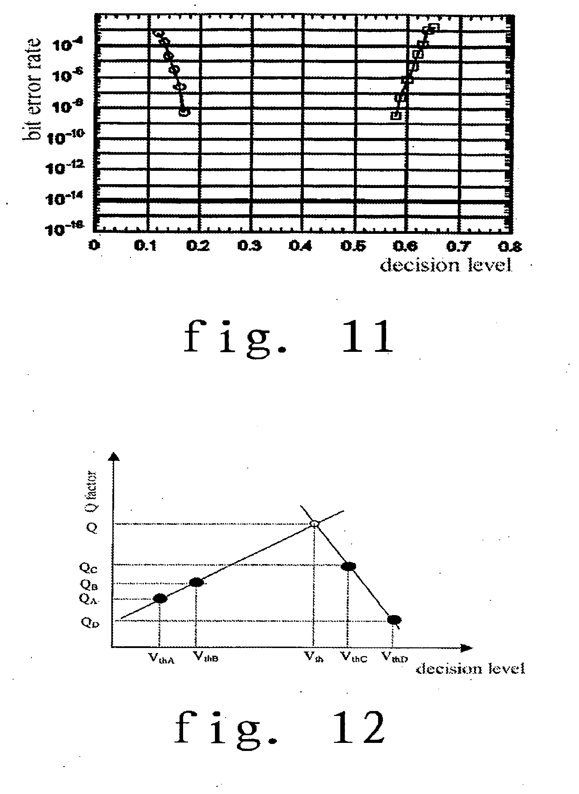

In figure 11, the BER corresponding to different decision levels and different decision times are shown. The factor Q corresponding to the decision level and decision time can be calculated according to the BER.

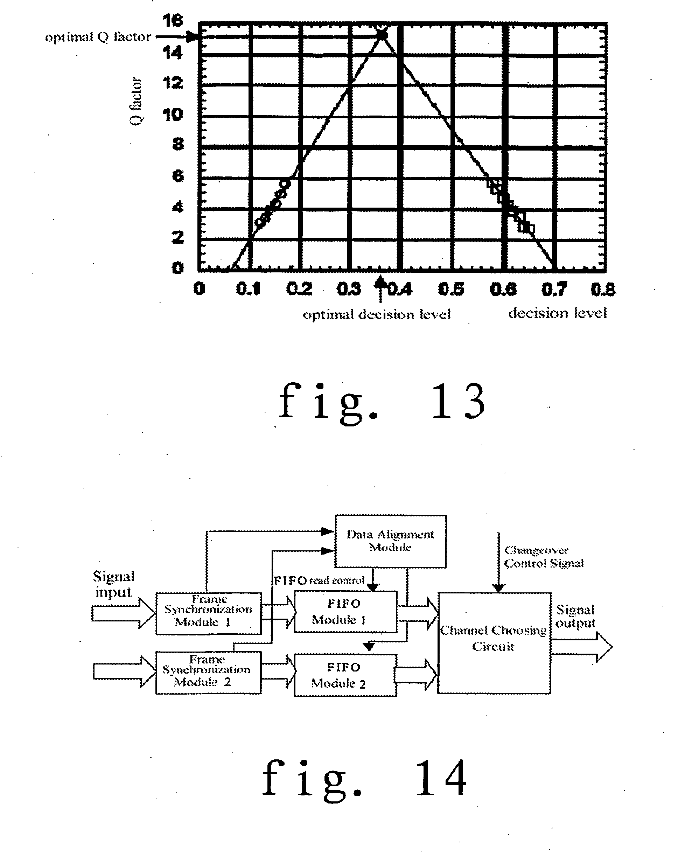

By way of example, a factor Q corresponding to the optimal decision level at a certain decision time which is obtained through a linear extrapolation method is illustrated hereinafter. Provided decision levels A, B, and C, D lie on the two sides of the optimal decision level respectively, as shown in figure 12, the decision levels are $V_{thA}$, $V_{thB}$, $V_{thC}$, and $V_{thD}$ respectively, the factors Q calculated through BER are $Q_A$, $Q_B$, $Q_C$, and $Q_D$ respectively. According to the factors Q $Q_A$ and $Q_B$ at the decision levels $V_{thA}$ and $V_{thB}$, a beeline Q-Vth is matched. Also, according to the factors Q $Q_C$ and $Q_D$ at the decision levels $V_{thC}$ and $Y_{thD}$, another beeline Q-Vth is matched. The crossing of these 2 beelines corresponds to the optimal decision level $V_{th}$ and $Q_{th}$. Based on the same theory, more BERs at decision levels can be detected, two Q-th beelines can be matched more accurately, and the optimal decision levels $V_{th}$ and $Q_{th}$ can be obtained according to the crossing point of the two beelines, as shown in figure 13.

In the following, the optimization method based on the tactic of factor Q of the invention will be discussed.

In a case with the dynamic filter, under the condition of each set of parameters of dynamic filter, the decision level of LIA and the decision time of CDR are changed, and the BERs (T, V) of different decision times T and decision levels V in the eye pattern are recorded. The factor Q corresponding to different decision time of CDR and different decision level of LIA can be calculated according to the BER. Since the BER is detected during a certain interval of detecting time, for the decision time of CDR and the decision level of LIA when the BER is better than detection precision, the factor Q is calculated using the extrapolation method above. Thus, the factors Q corresponding to each CDR decision time and LIA decision level can be obtained through calculation or detection, and the largest factor Q therein is searched. The largest factors Q under different dynamic filter parameters are compared, and the optimal dynamic filter parameter is chosen according to the principle that the factor Q is the largest, the corresponding largest factor Q is Qn. The CDR decision time and the LIA decision level corresponding to the Qn are the optimal decision time and the optimal decision level respectively. If the BER of the main channel is worse than the specified threshold Berth, the decision level and the decision time of the standby channel are set at the optimal point first, then changeover is performed.

In a case without the dynamic filter, the principle block of the device of the invention is shown in figure 3, and the optimization method is shown in figure 5. As long as the CDR decision time and the LIA decision level corresponding to the largest factor Q are found, they are the optimal decision level and the optimal decision time respectively. Similarly, if the BER of the main channel is worse than the specified threshold BERth, the decision level and the decision time of the standby channel are set at the optimal point first, then changeover is performed.

2. a method for implementing the hitless changeover unit

There are many methods for implementing the hitless changeover unit. By way of example, a method will be illustrated for implementing the hitless changeover unit of the signal based on SDH frame structure. This kind of hitless changeover unit is widely used in the system side of SDH system to perform the hitless changeover between the main and spare cross boards.

The method for implementing the hitless changeover unit of the signal based on SDH frame structure is shown in figure 14. Two groups of signals after demultiplexing are searched by the SDH frame, then buffered by FIFO, and then output based on the SDH structure in the same sequence. Different time delays of the signals of the two channels are realized by setting the position of FIFO read/write pointer. The changeover control signal works at the position of A 1 or A2 where head of the SDH frame exists, thus the loss during the changeover only happens at the position of A1 or A2 where the head of the SDH frame exists, and the SDH payload and overhead are not affected, thus the hitless changeover control is implemented.

For the signals with other frame structures, based on the same principle, the changeover can be performed at the frame aligning byte or at the position of redundancy information, and thus the hitless changeover control is performed.

In above, the adaptive optical receiving device and the method thereof of the invention are described in detail through some embodiments, however, not all the embodiments are illustrated, those skilled in the art may implement various changes and modifications within the range of the invention. Therefore, the invention is not limited to the embodiments, and the range of the invention is prescribed in accordance with the appended claims.

**Claims**

1. An adaptive optical receiving device, comprising:

   an optical-electrical converter for receiving optical signals and converting them into electrical signals;
   a bias circuit for providing a bias for a direct current working point of said optical-electrical converter;
   a trans-impedance (TIA) and automatic gain control amplifier (AGC) for amplifying output signals of said optical-electrical converter and adjusting amplitudes of the amplified signals;
   a limiting amplifier (LIA), for shaping of the amplified signals received from the trans-impedance and automatic gain amplifier; and
   a clock data recovery (CDR) circuit for extracting data and clock from the shaped amplified signals output by the limiting amplifier,
   **characterized in that**
   the device comprises:

   a first limiting amplifier (LIA 1) and a second limiting amplifier (LIA 2)each separately connected to receive and shape the amplified signals received from said trans-impedance and automatic gain control amplifier;
   a first clock data recovery circuit (CDR circuit 1) and a second clock data recovery circuit (CDR circuit 2) for extracting data and clock from signals output by said first limiting amplifier and said second limiting amplifier respectively;
   a first demultiplexer and signal quality detection circuit (DEMUX and Signal Quality Detection 1) and a second demultiplexer and signal quality detection circuit (DEMUX and Signal Quality Detection 2) for detecting in real time signal quality of signals output by the first clock data recovery circuit and the second clock data recovery circuit respectively;
   a hitless changeover unit for selecting a main channel to output to a post-stage circuit based on the signal quality from said first demultiplexer and signal quality detection circuit and said second demultiplexer and signal quality detection circuit, taking the other channel as a standby channel, and switching in real time between the main channel and the standby channel according to control signals;
   a control unit for controlling every component in said main channel, said bias circuit and said hitless changeover unit, and controlling every component in said standby channel to optimize signals in this channel in real time.

2. The device of claim 1, further comprising:

   a first dynamic filter and a second dynamic filter for dynamically filtering signals output by said trans-impedance and automatic gain control amplifier and outputting the filtered signals to said first limiting amplifier (LIA 1) and said second limiting amplifier (LIA 2) respectively.

3. The device of claim 1 or 2, wherein said control unit uses signal quality detection signals to control said first demultiplexer and signal quality detection circuit (DEMUX and Signal Quality Detection 1) and said second demultiplexer and signal quality detection circuit (DEMUX and Signal Quality Detection 2) to real time detect signal quality of signals output by said first clock data recovery circuit and said second clock data recovery circuit.

4. The device of claim 1, 2 or 3, wherein said first demultiplexer and signal quality detection circuit and said second demultiplexer and signal quality detection circuit send the signal quality detection results of the main channel and the standby channel back to said control unit respectively.

5. The device of claim 3 or 4, wherein said control unit controls optimization of each component in the standby channel according to the signal quality detection result of said standby channel.

6. The device of claim 5, wherein after finishing the optimization of signals in the standby channel, said control unit compares the signal quality detection results fed back respectively by said first demultiplexer and signal quality detection circuit and said second demultiplexer and signal quality detection circuit and, if the signal quality of said standby channel is better than that of the main channel, or the signal quality of said main channel decreases to a specified threshold while the signal quality of said standby channel after optimization is better than the specified threshold, said control unit informs said hitless changeover unit to perform changeover between the main and the standby channels.

7. The device of any preceding claim, wherein said control unit uses changeover control signals to control the hitless changeover unit to perform changeover between the main and the standby channels.

8. The device of any preceding claim, wherein the quality detection for received signals performed by said first demultiplexer and signal quality detection circuit and said second demultiplexer and signal quality detection circuit is detection for bit error rate of the received signals.

9. The device of claim 8, wherein said control unit compares the bit error rate of the main channel detected with a specified bit error rate threshold, if the bit error rate of the main channel is lower than the bit error rate threshold while the signal quality of said standby channel after optimization is better than the bit error rate threshold, said control unit controls said hitless changeover unit to perform changeover between the main and the standby channels.

10. The device of claims 1 to 7, wherein the quality detection for received signals performed by said first demultiplexer and signal quality detection circuit and said second demultiplexer and signal quality detection circuit is detection for the factor Q of the received signals.

11. The device of claim 10, wherein said control unit compares the factor Q of the main channel detected with a specified factor Q threshold, if factor Q of said main channel is lower than the factor Q threshold while factor Q of said standby channel is higher than the factor Q threshold, said control unit controls said hitless changeover unit to perform changeover between the main and the standby channels.

12. The device of any preceding claim, wherein said hitless changeover unit is implemented based on signals with SDH frame structure.

13. The device of claim 12, wherein said hitless changeover unit comprises:

    a first frame synchronization module and a second frame synchronization module for conducting SDH frame search for signals output by said first demultiplexer and signal quality detection circuit and said second demultiplexer and signal quality detection circuit respectively;
    a data alignment control module for receiving and aligning signals output by the first frame synchronization module and the second frame synchronization module when the signals output by these two modules have different time delays;
    a first FIFO module and a second FIFO module for buffering the signals from said first frame synchronization module and said second frame synchronization module or the signals from said data alignment module according to a set read/write pointer position;
    a channel choosing circuit for changing over and outputting signals buffered in said first FIFO module and said second FIFO module respectively under the control of changeover control signals, the time of changeover is at the position of frame synchronization information or redundancy information of the signals so as to realize a hitless changeover.

14. An adaptive optical receiving method using the adaptive optical receiving device of claim 1, **characterized in that** this method uses two sets of independent limiting amplifiers and clock data recovery circuits to process received signals respectively, a hitless changeover unit chooses a channel with good signal quality as the main channel, and takes the other one as the standby channel; meanwhile, a control unit controls real time optimization of signals in the standby channel, changeover between the main and the standby channels is performed when signal quality in the main channel worsens.

15. The method of claim 14, comprising the following steps of:

    choosing the main channel to process received optical signals by said hitless changeover unit (510);
    monitoring signal quality in the main channel and the standby channel in real time (515);
    optimizing the limiting amplifier and clock data recovery circuit on the current standby channel so as to optimize the signal quality in the standby channel under control of the control unit (520);
    comparing signal quality between said main channel and said standby channel (525);
    performing changeover between the main channel and the standby channel by said hitless changeover unit when signal quality in the main channel is worse than signal quality in the standby channel after optimization or the signal quality in said main channel decreases to a specified threshold while the signal quality in the standby channel after optimization is better than this threshold (530);

outputting the signals having been processed from said main channel (535).

16. The method of claim 15, wherein said device further comprises a first dynamic filter and a second dynamic filter, **characterized in that** said step of optimization further comprises:

optimizing the dynamic filter, the limiting amplifier and the clock data recovery circuit on the current standby channel under the control of the control unit so as to optimize the signal quality in the standby channel (620).

17. The method of claim 15, wherein prior to said choosing step, the follow step is also included:

presetting parameters for each component in the adaptive optical receiving device (505).

18. The method of claim 17, wherein said device further includes a first dynamic filter and a second dynamic filter, **characterized in that**, said step of presetting the parameters also includes:

presetting parameters for said first dynamic filter and said second dynamic filter (605).

**Patentansprüche**

1. Adaptive optische Empfangseinrichtung, die folgendes umfasst:

einen optoelektrischen Wandler, um optische Signale zu empfangen und sie in elektrische Signale umzuwandeln;
eine Bias-Schaltung zum Bereitstellen eines Bias für einen Gleichstromarbeitspunkt des optoelektrischen Wandlers;
einen Transimpedanz-Verstärker (TIA) und einen Verstärker mit automatischer Verstärkungssteuerung (AGC - automatic gain control), um Ausgangssignale des optoelektrischen Wandlers zu verstärken und die Amplituden der verstärkten Signale zu justieren;
einen Begrenzungsverstärker (LIA - limiting amplifier), für das Formen der von dem Transimpedanz-Verstärker und dem Verstärker mit automatischer Verstärkungssteuerung empfangenen verstärkten Signale; und
eine Taktrückgewinnungsschaltung (CDR - clock data recovery) zum Extrahieren von Daten und Takt aus den von den Begrenzungsverstärker ausgegebenen geformten verstärkten Signalen,
**dadurch gekennzeichnet, dass** die Einrichtung folgendes umfasst:

einen ersten Begrenzungsverstärker (LIA 1) und einen zweiten Begrenzungsverstärker (LIA 2), die jeweils separat geschaltet sind, um die von dem Transimpedanz-Verstärker und dem Verstärker mit automatischer Verstärkungssteuerung empfangenen verstärkten Signale zu empfangen und zu formen;
eine erste Taktrückgewinnungsschaltung (CDR-Schaltung 1) und eine zweite Taktrückgewinnungsschaltung (CDR-Schaltung 2) zum Extrahieren von Daten und Takt aus von dem ersten Begrenzungsverstärker bzw. dem zweiten Begrenzungsverstärker ausgegebenen Signalen;
eine erste Demultiplexer- und Signalqualitätsdetektionsschaltung (DEMUX und Signalqualitätsdetektion 1) und eine zweite Demultiplexer- und Signalqualitätsdetektionsschaltung (DEMUX und Signalqualitätsdetektion 2), um Signalqualität von von der ersten Taktrückgewinnungsschaltung bzw. der zweiten Taktrückgewinnungsschaltung ausgegebenen Signalen in Echtzeit zu detektieren;
eine verlustfreie Umschalteinheit zum Auswählen eines Hauptkanals zum Ausgeben zu einer Nachstufenschaltung auf der Basis der Signalqualität von der ersten Demultiplexer- und Signalqualitätsdetektionsschaltung und der zweiten Demultiplexer- und Signalqualitätsdetektionsschaltung, Nehmen des anderen Kanals als Stand-by-Kanal und Umschalten zwischen dem Hauptkanal und dem Stand-by-Kanal in Echtzeit gemäß Steuersignalen;
eine Steuereinheit zum Steuern jeder Komponente in dem Hauptkanal, der Bias- Schaltung und der verlustfreien Umschalteinheit und Steuern jeder Komponente in dem Stand-by-Kanal, um Signale in diesem Kanal in Echtzeit zu optimieren.

2. Einrichtung nach Anspruch 1, die weiterhin folgendes umfasst:

einen ersten dynamischen Filter und einen zweiten dynamischen Filter zum dynamischen Filtern von durch den Transimpedanz-Verstärker und den Verstärker mit automatischer Verstärkungssteuerung ausgegebenen Signalen und Ausgeben der gefilterten Signale an den ersten Begrenzungsverstärker (LIA 1) und den zweiten Begrenzungsverstärker (LIA 2).

3. Einrichtung nach Anspruch 1 oder 2, wobei die Steuereinheit Signalqualitätsdetektionssignale zum Steuern der ersten Demultiplexer- und Signalqualitätsdetektionsschaltung (DEMUX und Signalqualitätsdetektion 1) und der zweiten Demultiplexer- und Signalqualitätsdetektionsschaltung (DEMUX und Signalqualitätsdetektion 2) verwendet, um die Signalqualität von von der ersten Taktrückgewinnungsschaltung und der zweiten Taktrückgewinnungsschaltung ausgegebenen Signalen in Echtzeit zu detektieren.

4. Einrichtung nach Anspruch 1, 2 oder 3, wobei die erste Demultiplexer- und Signalqualitätsdetektionsschaltung und die zweite Demultiplexer- und Signalqualitätsdetektionsschaltung die Signalqualitätsdetektionsergebnisse des Hauptkanals und des Stand-by-Kanals jeweils an die Steuereinheit zurückschicken.

5. Einrichtung nach Anspruch 3 oder 4, wobei die Steuereinheit die Optimierung jeder Komponente in dem Stand-by-Kanal gemäß dem Signalqualitätsdetektionsergebnis des Stand-by-Kanals steuert.

6. Einrichtung nach Anspruch 5, wobei nach dem Beenden der Optimierung von Signalen in dem Stand-by-Kanal die Steuereinheit die von der ersten Demultiplexer- und Signalqualitätsdetektionsschaltung und der zweiten Demultiplexer- und Signalqualitätsdetektionsschaltung zurückgeschickten Signalqualitätsdetektionsergebnisse vergleicht, und falls die Signalqualität des Stand-by-Kanals besser ist als die des Hauptkanals oder die Signalqualität des Hauptkanals auf einen spezifizierten Schwellwert abnimmt, während die Signalqualität des Stand-by-Kanals nach der Optimierung besser ist als der spezifizierte Schwellwert, die Steuereinheit die verlustfreie Umschalteinheit dahingehend informiert, die Umschaltung zwischen dem Hauptkanal und dem Stand-by-Kanal durchzuführen.

7. Einrichtung nach einem vorhergehenden Anspruch, wobei die Steuereinheit Umschaltsteuersignale verwendet, um die verlustfreie Umschalteinheit dahingehend zu steuern, die Umschaltung zwischen dem Hauptkanal und dem Stand-by-Kanal durchzuführen.

8. Einrichtung nach einem vorhergehenden Anspruch, wobei die Qualitätsdetektion für empfangene Signale, die von der ersten Demultiplexer- und Signalqualitätsdetektionsschaltung und der zweiten Demultiplexer- und Signalqualitätsdetektionsschaltung durchgeführt wird, eine Detektion auf eine Bitfehlerrate der empfangenen Signale ist.

9. Einrichtung nach Anspruch 8, wobei die Steuereinheit die Bitfehlerrate des detektierten Hauptkanals mit einem spezifizierten Bitfehlerratenschwellwert vergleicht, falls die Bitfehlerrate des Hauptkanals niedriger ist als der Bitfehlerratenschwellwert, während die Signalqualität des Stand-by-Kanals nach der Optimierung besser ist als der Bitfehlerratenschwellwert, die Steuereinheit die verlustfreie Umschalteinheit dahingehend steuert, eine Umschaltung zwischen dem Hauptkanal und dem Stand-by-Kanal durchzuführen.

10. Einrichtung nach Ansprüchen 1 bis 7, wobei die Qualitätsdetektion für empfangene Signale, von der ersten Demultiplexer- und Signalqualitätsdetektionsschaltung und der zweiten Demultiplexer- und Signalqualitätsdetektionsschaltung durchgeführt, eine Detektion auf den Faktor Q der empfangenen Signale ist.

11. Einrichtung nach Anspruch 10, wobei die Steuereinheit den Faktor Q des detektierten Hauptkanals mit einem spezifizierten Faktor-Q-Schwellwert vergleicht, falls der Faktor Q des Hauptkanals unter dem Faktor-Q-Schwellwert liegt, während der Faktor Q des Stand-by-Kanals höher ist als der Faktor-Q-Schwellwert, die Steuereinheit die verlustfreie Umschalteinheit dahingehend steuert, eine Umschaltung zwischen dem Hauptkanal und dem Stand-by-Kanal durchzuführen.

12. Einrichtung nach einem vorhergehenden Anspruch, wobei die verlustfreie Umschalteinheit auf der Basis von Signalen mit einer SDH-Rahmenstruktur implementiert ist.

13. Einrichtung nach Anspruch 12, wobei die verlustfreie Umschalteinheit Folgendes umfasst:

ein erstes Rahmensynchronisationsmodul und ein zweites Rahmensynchronisationsmodul zum Durchführen einer SDH-Rahmensuche nach jeweils von der ersten Demultiplexer- und Signalqualitätsdetektionsschaltung und der zweiten Demultiplexer- und Signalqualitätsdetektionsschaltung ausgegebenen Signalen; ein Datenausrichtungssteuermodul zum Empfangen und Ausrichten von von dem ersten Rahmensynchronisationsmodul und dem zweiten Rahmensynchronisationsmodul ausgegebenen Signalen, wenn die von diesen beiden Modulen ausgegebenen Signale unterschiedliche Zeitverzögerungen aufweisen;

ein erstes FIFO-Modul und ein zweites FIFO-Modul zum Puffern der Signale von dem ersten Rahmensynchronisationsmodul und dem zweiten Rahmensynchronisationsmodul oder der Signale von dem Datenausrichtungsmodul gemäß einer gesetzten Lese/Schreib-Zeiger-Position;

eine Kanalwahlschaltung zum Umschalten und Ausgeben von in dem ersten FIFO-Modul bzw. dem zweiten FIFO-Modul gepufferten Signalen unter der Steuerung von Umschaltsteuersignalen, die Zeit des Umschaltens ist an der Position von Rahmensynchronisationsinformationen oder Redundanzinformationen der Signale, um eine verlustfreie Umschaltung zu realisieren.

14. Adaptives optisches Empfangsverfahren unter Verwendung der adaptiven optischen Empfangseinrichtung von Anspruch 1, **dadurch gekennzeichnet, dass** dieses Verfahren zwei Sätze von unabhängigen Begrenzungsverstärkern und Taktrückgewinnungsschaltungen zum jeweiligen Verarbeiten empfangener Signale verwendet, eine verlustfreie Umschalteinheit einen Kanal mit guter Signalqualität als den Hauptkanal wählt und den anderen als den Stand-by-Kanal nimmt; währenddessen steuert eine Steuereinheit die Echtzeitoptimierung von Signalen in dem Stand-by-Kanal, eine Umschaltung zwischen dem Hauptkanal und dem Stand-by-Kanal wird durchgeführt, wenn sich die Signalqualität in dem Hauptkanal verschlechtert.

15. Verfahren nach Anspruch 14, das die folgenden Schritte umfasst:

Wählen des Hauptkanals zum Verarbeiten empfangener optische Signale durch die verlustfreie Umschalteinheit (510);
Überwachen der Signalqualität in dem Hauptkanal und dem Stand-by Kanal in Echtzeit (515);
Optimieren des Begrenzungsverstärkers und der Taktrückgewinnungsschaltung auf dem aktuellen Stand-by-Kanal, um die Signalqualität in dem Stand-by-Kanal unter der Steuerung der Steuereinheit zu optimieren (520);
Vergleichen der Signalqualität zwischen dem Hauptkanal und dem Stand-by-Kanal (525);
Durchführen einer Umschaltung zwischen dem Hauptkanal und dem Stand-by-Kanal durch die verlustfreie Umschalteinheit, wenn die Signalqualität in dem Hauptkanal nach der Optimierung schlechter ist als die Signalqualität in dem Stand-by-Kanal oder die Signalqualität in dem Hauptkanal auf einen spezifizierten Schwellwert abfällt, während die Signalqualität in dem Stand-by-Kanal nach Optimierung besser ist als dieser Schwellwert (530);
Ausgeben der verarbeiteten Signale aus dem Hauptkanal (535).

16. Verfahren nach Anspruch 15, wobei die Einrichtung weiterhin einen ersten dynamischen Filter und einen zweiten dynamischen Filter umfasst, **dadurch gekennzeichnet, dass** der Schritt der Optimierung weiterhin Folgendes umfasst:

Optimieren des dynamischen Filters, des Begrenzungsverstärkers und der Taktrückgewinnungsschaltung auf dem aktuellen Stand-by-Kanal unter der Steuerung der Steuereinheit, um die Signalqualität im Stand-by-Kanal zu optimieren (620).

17. Verfahren nach Anspruch 15, wobei vor dem Wählschritt auch der folgende Schritt enthalten ist:

Voreinstellen von Parametern für jede Komponente in der adaptiven optischen Empfangseinrichtung (505).

18. Verfahren nach Anspruch 17, wobei die Einrichtung weiterhin einen ersten dynamischen Filter und einen zweiten dynamischen Filter enthält, **dadurch gekennzeichnet, dass** der Schritt des Voreinstellens der Parameter auch Folgendes beinhaltet:

Voreinstellen von Parametern für den ersten dynamischen Filter und den zweiten dynamischen Filter (605).

**Revendications**

1. Dispositif de réception optique adaptatif, comprenant :

un convertisseur optique-électrique pour recevoir des signaux optiques et les convertir en signaux électriques ;
un circuit de polarisation pour fournir une polarisation pour un point de fonctionnement de courant direct dudit convertisseur optique-électrique ;

un amplificateur d'impédance (TIA) et à commande automatique de gain (AGC) pour amplifier des signaux de sortie dudit convertisseur optique-électrique et ajuster des amplitudes des signaux amplifiés ;

un amplificateur limiteur (LIA) pour former les signaux amplifiés reçus de l'amplificateur d'adaptation d'impédance et à commande automatique de gain ; et

un circuit de récupération de données d'horloge (CDR) pour extraire des données et une horloge des signaux amplifiés formés émis en sortie par l'amplificateur limiteur,

**caractérisé en ce que**

le dispositif comprend :

un premier amplificateur limiteur (LIA 1) et un second amplificateur limiteur (LIA 2) chacun connecté séparément pour recevoir et former les signaux amplifiés reçus dudit amplificateur d'adaptation d'impédance et à commande automatique de gain ;

un premier circuit de récupération de données d'horloge (circuit CDR 1) et un second circuit de récupération de données d'horloge (circuit CDR 2) pour extraire des données et une horloge des signaux émis en sortie par ledit premier amplificateur limiteur et ledit second amplificateur limiteur respectivement ;

un premier circuit démultiplexeur et de détection de qualité de signal (DEMUX et détection de qualité de signal 1) et un second circuit démultiplexeur et de détection de qualité de signal (DEMUX et détection de qualité de signal 2) pour détecter en temps réel la qualité de signal de signaux émis en sortie par le premier circuit de récupération de données d'horloge et le second circuit de récupération de données d'horloge respectivement ;

une unité de permutation sans à-coups pour sélectionner un canal principal pour émettre en sortie vers un circuit d'étage postérieur basé sur la qualité de signal dudit premier circuit démultiplexeur et de détection de qualité de signal et dudit second circuit démultiplexeur et de détection de qualité de signal, prendre l'autre canal comme canal d'attente et commuter en temps réel entre le canal principal et le canal d'attente selon des signaux de commande ;

une unité de commande pour commander chaque composant dans ledit canal principal, ledit circuit de polarisation et ladite unité de permutation sans à-coups, et commander chaque composant dans ledit canal d'attente pour optimiser les signaux dans ce canal en temps réel.

2. Dispositif selon la revendication 1, comprenant en outre :

un premier filtre dynamique et un second filtre dynamique pour filtrer dynamiquement les signaux émis en sortie par ledit amplificateur d'adaptation d'impédance et à commande automatique de gain et émettre en sortie les signaux filtrés audit premier amplificateur limiteur (LIA 1) et audit second amplificateur limiteur (LIA 2) respectivement.

3. Dispositif selon la revendication 1 ou 2, dans lequel ladite unité de commande utilise des signaux de détection de qualité de signal pour commander ledit premier circuit démultiplexeur et de détection de qualité de signal (DEMUX et détection de qualité de signal 1) et ledit second circuit démultiplexeur et de détection de qualité de signal (DEMUX et détection de qualité de signal 2) pour détecter en temps réel la qualité de signal de signaux émis en sortie par ledit premier circuit de récupération de données d'horloge et ledit second circuit de récupération de données d'horloge.

4. Dispositif selon la revendication 1, 2 ou 3, dans lequel ledit premier circuit démultiplexeur et de détection de qualité de signal et ledit second circuit démultiplexeur et de détection de qualité de signal renvoient les résultats de détection de qualité de signal au canal principal et du canal d'attente à ladite unité de commande respectivement.

5. Dispositif selon la revendication 3 ou 4, dans lequel ladite unité de commande commande l'optimisation de chaque composant dans le canal d'attente selon le résultat de détection de qualité de signal dudit canal d'attente.

6. Dispositif selon la revendication 5, dans lequel après la fin de l'optimisation des signaux dans le canal d'attente, ladite unité de commande compare les résultats de détection de qualité de signal réinjectés respectivement par ledit premier circuit démultiplexeur et de détection de qualité signal et ledit second circuit démultiplexeur et de détection de qualité de signal et, si la qualité de signal dudit canal d'attente est meilleure que celle du canal principal, ou si la qualité de signal dudit canal principal diminue à un seuil spécifié alors que la qualité de signal dudit canal d'attente après optimisation est meilleure que le seuil spécifié, ladite unité de commande informe ladite unité de permutation sans à-coups de réaliser une permutation entre les canaux principal et d'attente.

**7.** Dispositif selon l'une quelconque des revendications précédentes, dans lequel ladite unité de commande utilise des signaux de commande de permutation pour commander à l'unité de permutation sans à-coups de réaliser une permutation entre les canaux principal et d'attente.

**8.** Dispositif selon l'une quelconque des revendications précédentes, dans lequel la détection de qualité pour les signaux reçus réalisée par ledit premier circuit démultiplexeur et de détection de qualité de signal et ledit second circuit démultiplexeur et de détection de qualité de signal est une détection du taux d'erreur sur les bits des signaux reçus.

**9.** Dispositif selon la revendication 8, dans lequel ladite unité de commande compare le taux d'erreur sur les bits du canal principal détecté avec un seuil de taux d'erreur sur les bits spécifié, si le taux d'erreur sur les bits du canal principal est inférieur au seuil de taux d'erreur sur les bits alors que la qualité de signal dudit canal d'attente après optimisation est meilleure que le seuil de taux d'erreur sur les bits, ladite unité de commande commande à ladite unité de permutation sans à-coups de réaliser la permutation entre les canaux principal et d'attente.

**10.** Dispositif selon les revendications 1 à 7, dans lequel la détection de qualité pour les signaux reçus réalisée par ledit premier circuit démultiplexeur et de détection de qualité de signal et ledit second circuit démultiplexeur et de détection de qualité de signal est une détection du facteur Q des signaux reçus.

**11.** Dispositif selon la revendication 10, dans lequel ladite unité de commande compare le facteur Q du canal principal détecté avec un seuil de facteur Q spécifié, si le facteur Q dudit canal principal est inférieur au seuil de facteur Q alors que le facteur Q dudit canal d'attente est supérieur au seuil de facteur Q, ladite unité de commande commande à ladite unité de permutation sans à-coups de réaliser une permutation entre les canaux principal et d'attente.

**12.** Dispositif selon l'une quelconque des revendications précédentes, dans lequel ladite unité de permutation sans à-coups est implémentée en se basant sur des signaux avec une structure de trame à hiérarchie numérique synchrone (SDH).

**13.** Dispositif selon la revendication 12, dans lequel ladite unité de permutation sans à-coups comprend :

un premier module de synchronisation de trame et un second module de synchronisation de trame pour conduire une recherche de trame SDH pour des signaux émis en sortie par ledit premier circuit démultiplexeur et de détection de qualité de signal et ledit second circuit démultiplexeur et de détection de qualité de signal respectivement ;
un module de commande d'alignement de données pour recevoir et aligner les signaux émis en sortie par le premier module de synchronisation de trame et le second module de synchronisation de trame lorsque les signaux émis en sortie par ces deux modules ont différents délais de temporisation ;
un premier module FIFO et un second module FIFO pour mettre en mémoire tampon les signaux en provenance dudit premier module de synchronisation de trame et dudit second module de synchronisation de trame ou les signaux en provenance dudit module d'alignement de données selon une position de pointeur de lecture/écriture établie ;
un circuit de choix de canal pour permuter et émettre en sortie les signaux mis en mémoire tampon dans ledit premier module FIFO et ledit second module FIFO respectivement sous la commande de signaux de commande de permutation, le temps de permutation est à la position d'informations de synchronisation de trame ou d'informations de redondance des signaux de façon à réaliser une permutation sans à-coups.

**14.** Procédé de réception optique adaptatif utilisant le dispositif de réception optique adaptatif selon la revendication 1, **caractérisé en ce que** ce procédé utilise deux ensembles d'amplificateurs limiteurs et de circuits de récupération de données d'horloge indépendants pour traiter les signaux reçus respectivement, une unité de permutation sans à-coups choisit un canal avec une bonne qualité de signal en tant que canal principal et prend l'autre canal comme canal d'attente ; pendant ce temps une unité de commande commande l'optimisation en temps réel de signaux dans le canal d'attente, la permutation entre les canaux principal et d'attente est réalisée lorsque la qualité de signal dans le canal principal se dégrade.

**15.** Procédé selon la revendication 14, comprenant les étapes suivantes :

de choix du canal principal pour traiter des signaux optiques reçus par ladite unité de permutation sans à-coups (510) ;

de surveillance de la qualité de signal dans le canal principal et le canal d'attente en temps réel (515) ;

d'optimisation de l'amplificateur limiteur et du circuit de récupération de données d'horloge sur le canal d'attente actuel de façon à optimiser la qualité de signal dans le canal d'attente sous la commande de l'unité de commande (520) ;

de comparaison de la qualité de signal entre ledit canal principal et ledit canal d'attente (525) ;

de réalisation de la permutation entre le canal principal et le canal d'attente par ladite unité de permutation sans à-coups lorsque la qualité de signal dans le canal principal est pire que la qualité de signal dans le canal d'attente après optimisation ou la qualité de signal dans ledit canal principal diminue à un seuil spécifié alors que la qualité de signal dans le canal d'attente après optimisation est meilleure que ce seuil (530) ;

d'émission en sortie des signaux ayant été traités depuis ledit canal principal (535).

**16.** Procédé selon la revendication 15, dans lequel ledit dispositif comprend en outre un premier filtre dynamique et un second filtre dynamique, **caractérisé en ce que** ladite étape d'optimisation comprend en outre :

l'optimisation du filtre dynamique, l'amplificateur limiteur et du circuit de récupération de données d'horloge sur le canal d'attente actuel sous la commande de l'unité de commande de façon à optimiser la qualité de signal dans le canal d'attente (620).

**17.** Procédé selon la revendication 15, dans lequel avant ladite étape de choix, l'étape suivante est également comprise :

la présélection des paramètres pour chaque composant dans le dispositif de réception optique adaptatif (505).

**18.** Procédé selon la revendication 17, dans lequel ledit dispositif comprend en outre un premier filtre dynamique et un second filtre dynamique, **caractérisé en ce que** ladite étape de présélection des paramètres comprend également :

la présélection des paramètres pour ledit premier filtre dynamique et ledit second filtre dynamique (605).

fig. 1

fig. 2

fig. 3

fig. 4

Preset parameters for
limiting amplifier, clock
data recovery circuit and
hitless changeover unit — 505

The main channel receives and
processes the optical signal — 510

Detect the signal quality
of the standby channel — 515

Optimize the limiting amplifier
and the clock date recovery circuit
of the standby signal channel so
as to optimize the quality
of the standby signal — 520

The
quality of the
standby signal is much better
than that of the
main signal? — 525

N

Y

Perform hitless
changeover — 530

Output signal — 535

# fig. 5

Preset parameters for the dynamic
filter, the limiting amplifier, the clock
data recovery circuit, and
the hitless changeover unit — 605

The main channel
receives and processes
the optical signal — 610

Detect the signal quality of
the standby channel — 615

Optimize the dynamic filter,
the limiting amplifier and the
clock data recovery circuit of the
standby signal channel so as to
optimize the quality of the standby
signal — 620

N — The
quality of the
standby signal is much better than
that of the main signal? — 625

Y

Perform hitless
Changeover — 630

Output signal — 635

# f i g. 6

# f i g. 7

area without bit error

**fig. 8**

area without bit error

**fig. 9**

dV

dT

**fig. 10**

fig. 11

fig. 12

fig. 13

fig. 14

**EP 1 830 491 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004086275 A